# EUROPEAN PATENT APPLICATION

(11) **EP 1 741 595 A2**
(43) Date of publication of application: **10.01.2007**
(21) Application number: 06011159.8
(22) Date of filing: 31.05.2006
(51) Int. Cl.: B60P 1/16

(54) **Structure for supporting a dump body in a goods vehicle**

(30) Priority: 08.07.2005 IT MO20050174
(71) Applicant: R.A.O. Di Rossi Dino E C. S.N.C., 60016 Montemarciano AN (IT)
(72) Inventor: Rossi, Dino, 90018 Montemarciano (AN) (IT)
(74) Representative: Crugnola, Pietro

(57) **Abstract**

A structure for supporting a dump body (3) in a goods vehicle (1) comprises first supporting means (7) and second supporting means (8) respectively fixable through fixing means (26) in a front part and a in rear part of said vehicle (1), said first supporting means (7) and said second supporting means (8) being provided with articulated coupling means (9) for coupling with said body (3) and at least said first supporting means (7) being comprised in a crosspiece (16) that has an axial length such as to occupy transversely said vehicle (1).

## Description

The invention relates to a structure for supporting a dump body in a goods vehicle, in particular a dumper, a dump trailer or a semitrailer.

It is known that a dump body of a dumper is supported by a structure connected to longitudinal members of a frame that extends from a front part to a rear part of the dumper. The structure comprises supporting elements that project from the longitudinal member to the exterior of the dumper and which are provided with articulated joints arranged for coupling with seat elements provided on lower edges of the body. Owing to the articulated joints and to the seat elements it is possible to rotate the body around a side.

Generally, supporting elements welded substantially orthogonally to the longitudinal members are provided.

A drawback of the known structure is that as the supporting elements are made of a material that is weldable to the longitudinal members, such as, for example, steel, the supporting elements are rather heavy and the weight of such supporting elements influences' significantly the total weight that the dumper can bear. A greater weight of the structure means that the body has to be loaded with fewer goods.

Another drawback is that welding the supporting elements to the longitudinal members causes thermal stress that may weaken portions of the latter. Such thermal stress is also a cause of cracks. The mechanical stress to which the vehicle is subjected during motion thereof may cause each longitudinal member to break at the weakened portions or cracks.

Still another drawback is that the supporting elements cannot be replaced in the event of a fault without acting directly on the longitudinal members. In fact, to remove, for example, the welded supporting elements they must be cut near the welded zone, with the risk of deforming or damaging the longitudinal members.

An object of the invention is to improve the structures for supporting a dump body of known type.

A further object is to provide a structure for supporting a dump body in a goods vehicle that enables the maximum load to be increased that is sustainable by the body with respect to prior-art structures.

A further object is to provide a structure for supporting a body that can be replaced easily in the event of damage without the risk of deforming or altering the frame of the vehicle.

Still another object is to produce a structure for supporting a body in a vehicle that can be mounted on the vehicle in a relatively simple manner.

According to the invention, a structure is provided for supporting a dump body in a goods vehicle, comprising first supporting means and second supporting means respectively fixable through fixing means in a front part and in a rear part of said vehicle, said first supporting means and said second supporting means being provided with articulated coupling means for coupling with said body, characterised in that at least said first supporting means is comprised in a crosspiece that has an axial length such as to occupy transversely said vehicle.

Owing to the invention, it is possible to mount the first supporting means in rather a simple manner, by mounting the entire crosspiece.

In an embodiment, also the second supporting means is comprised in a further crosspiece such as to occupy the vehicle transversely.

Still in another embodiment, the structure further comprises further supporting means, functionally and structurally the same as first supporting means.

In a further embodiment the fixing means comprises removable fixing means. This enables both the first supporting means and the second supporting means to be mounted and dismantled easily.

It is further possible to replace the crosspiece in the event of faults without causing modifications or damage to the frame of the vehicle.

In further embodiments, the first supporting means and/or the second supporting means are made of a material having a relatively low specific weight, in particular a metal, such as for example aluminium or an aluminium alloy or a light alloy.

Owing to this embodiment, it is possible to reduce the weight of the structure and thus increase the weight of the goods that can be loaded onto the body.

The invention can be better understood and implemented with reference to the enclosed drawings, that show some exemplifying and non limitative embodiments thereof, in which:
Figure 1 is a schematic perspective view of a tractor together with a semitrailer provided with a structure for supporting a dump body;
Figure 2 is a fragmentary front view of supporting means provided in the structure di Figure 1 mounted on a part of the frame of the semitrailer;
Figure 3 is a lateral partial view in the direction A of the supporting means in Figure 2;
Figure 4 is a plant partial view of the supporting means in Figure 2;
Figure 5 is a section taken along the plane V-V of Figure 3, illustrating an embodiment of the supporting means.

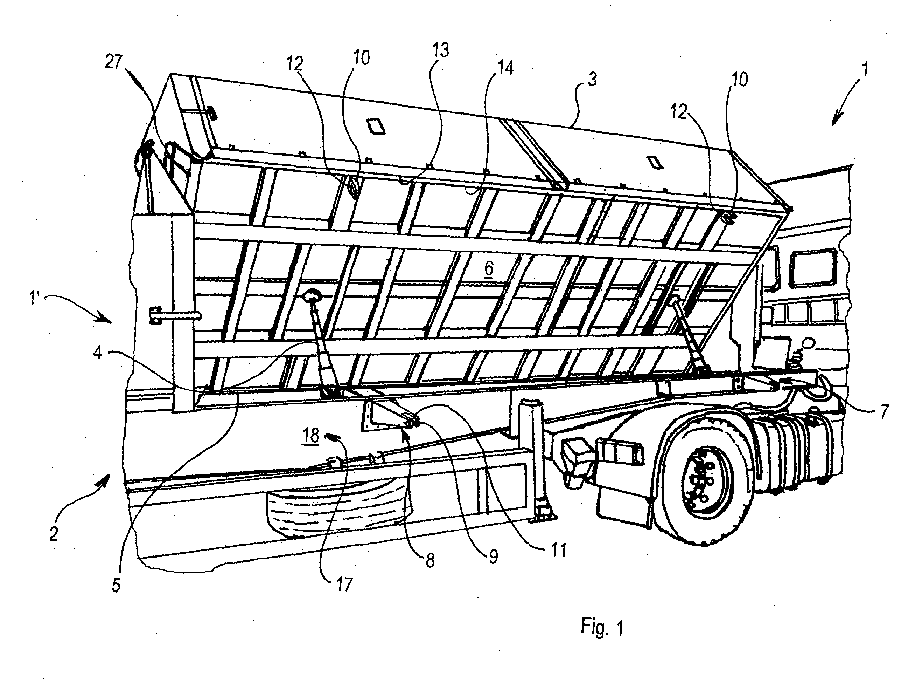

In Figure 1 a goods vehicle 1 is shown, in particular a tractor comprising a semitrailer provided with a structure 2 for supporting a body 3 with which the semitrailer is provided.

The vehicle 1 may be of a different type than what has been indicated above, it may for example be a truck or of the type comprising a trailer.

The body 3 is a dump body, driven by at least a linear actuator 4, for example of the telescopic type, arranged for pushing a base 6 of the body 3, the base 6 being positioned underneath the body 3, so as to torque to the body 3 to enable rotation of the body 3 along a side 5 thereof.

The structure 2 is provided with supporting means suitable for supporting the body 3 comprising first supporting means 7 arranged on a front part of a frame 17 of the semitrailer 1' and second supporting means 8 arranged on a rear part of the frame 17 of the semitrailer 1'. The first supporting means 7 and the second supporting means 8 protrudes from a frame 17 of the vehicle 1 on opposite sides of this frame 17.

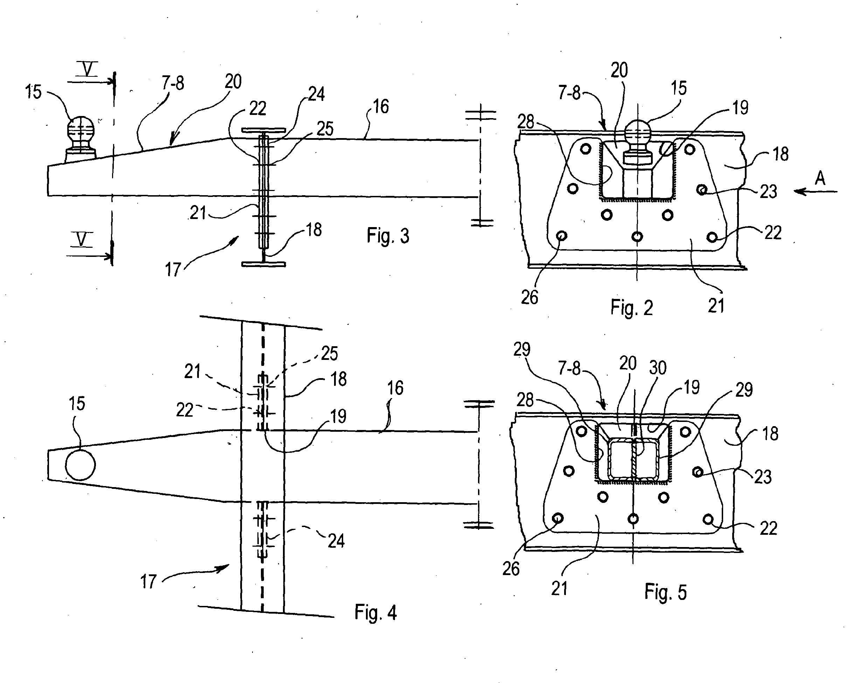

The first supporting means 7 and the second supporting means 8 are provided with articulated coupling means 9 such as to couple with a suitable seat 12 obtained in housing means 10 mounted near edges 13 of the base 6 of the body 3. The articulated coupling means 9 may be of the one cylindrical pin 11 type, as shown in Figure 1, or of the ball-and-socket joint 15 type as shown in the embodiments in Figures 2 to 5, or of another type.

Depending on the direction of the force applied by the' linear actuator 4, the body 3 can be rotated around the side 5 or around a further side 14 on which the housing means 10, is mounted, the further side 14 being opposite the side 5 of the body 3. In the embodiment with ball-and-socket joints 15, the body 3 can further be rotated around a still further side 27 of the base 6, in particular for overturning the body 3 towards a zone that is substantially adjacent and external to the rear part of the vehicle 1.

The first supporting means 7 is comprised in a crosspiece 16 that has an axial length such as to transversely occupy the vehicle 1.

The second supporting means 8 can be functionally and structurally shaped like the first supporting means 7 and thus be comprised in a further crosspiece that has an axial length such as to transversely occupy the vehicle 1.

In addition to the crosspiece 16 that defines the first supporting means 7 and to a further crosspiece that defines the second supporting means 8, a desired number of still further crosspieces may be current, i.e. a desired number of supporting means may be provided that may be arranged in intermediate positions on the frame 17 between the first supporting means 7 and the second supporting means 8.

With reference to Figures 2 to 4, the crosspiece 16 is shown that is mounted transversely to a longitudinal member 18 of the frame 17, this longitudinal member 18 connecting the front part to the rear part of the vehicle 1. The frame 17 comprises a further longitudinal member, which is not shown, which is substantially the same as the longitudinal member 18 and is arranged substantially parallel thereto. The longitudinal member 18 and the further longitudinal member are arranged below the body 3 and respectively in a zone nearer the further side 14 and in a further zone nearer the side 5 of the base 6, when the body 3 is resting on the articulated coupling means 9.

The longitudinal member 18 comprises an I-beam provided with an opening 19 such as to house the crosspiece 16.

The longitudinal member 18 may also have a "C" or tubular or other type of cross section.

The crosspiece 16 has a tubular shape having a substantially rectangular cross section and having tapered ends 20. In the embodiment in Figure 5, the crosspiece 16 is formed by two elongated elements 29 having a "C"-shaped cross section, with the cavities of each "C" facing and being separated from a laminar element 30. The elongated elements 29 and the laminar element 30 may be fixed together, in particular through welding. These elongated elements 29 are for example obtained by bending a sheet metal. The crosspiece 16 may have any desired shape, other than those disclosed. For example, the crosspiece 16 may comprise two pipes alongside one another.

Substantially orthogonally to the crosspiece 16 a plate 21 is then welded, provided with holes 22 such as to enable the plate 21 and thus the crosspiece 16 to be fixed to corresponding further holes 23 provided in the longitudinal member 18 through removable connecting means 26, for example screws or bolts. If the removable connecting means 26 comprises screws, the holes 22 or the further holes 23 can be threaded holes. The plate 21 is such as to be coupled with a wall of the longitudinal member 18 facing the exterior of the vehicle. The plate 21 has a shape that is substantially like that of an isosceles trapezium on the lesser base of which a recess 28 is provided having sides that are such as to at least partially surround the crosspiece 16 when the plate 21 is mounted on the crosspiece 16, as shown in Figure 2.

A further plate 24 may also be provided that is provided with still further holes 25 that correspond to the holes 22, and the further plate 24 being such as to couple with a' further wall of the longitudinal member 18 facing inside the vehicle. In this embodiment, between the plate 21 and the further plate 24 at least a wall of the longitudinal member 18 is interposed and the plate 21 and the further plate 24 are fixed together and to the longitudinal member 18 through the removable connecting means 26. The further plate 24 is substantially the same as the plate 21.

Owing to the plates 21 and 24 and to the removable connecting means 26 it is possible to easily mount the crosspiece 16 and therefore the supporting means.

As the supporting means is comprised in a crosspiece that is not welded to the longitudinal members 18 it is possible to choose the material with which to manufacture each crosspiece that is different from the material of which the longitudinal members 18 are made, which can, for example, be made of steel.

The crosspiece 16 is made of a material with a low specific weight, in particular a metal material, such as for example aluminium, or an aluminium alloy or a light alloy. This enables the supporting means 7, 8 to be lightened considerably with respect to the prior-art ones in steel.

The load capacity of the body 3 is thus increased.

The crosspiece 16 is mounted after a respective opening 19 and the corresponding further holes 23 have been obtained on each of the longitudinal members 18, then inserting the crosspiece 16 into the openings 19 so that the supporting means projects from each of the longitudinal members 18 by a preset quantity. In this position, the plates 21 are positioned outside the longitudinal members 18, fixed thereto by means of the removable connecting means 26 and subsequently the plates 21 are welded to the crosspiece 16.

If further plates 24 are also provided, the further plates 24 are positioned against the wall of the longitudinal members 18 facing inside the vehicle and the plates 21 and the further plates 24 are fixed to the longitudinal members 18 using the removable connecting means 26.

In the event of breakage of or wear to the supporting means, the crosspiece 16 can be separated, for example by means of a cut, into two portions. Each portion can easily be dismantled from the longitudinal members 18 thanks to the removable connecting means 26, without the risk of causing mechanical stress, deformations or alterations to the longitudinal members 18. The crosspiece 16 and with it the supporting means can be removed and a new crosspiece can be mounted by operating as already disclosed above, thus restoring the supporting means.

## Claims

1. Structure for supporting a dump body (3) in a goods vehicle (1), comprising first supporting means (7) and second supporting means (8) respectively fixable through fixing means (26) in a front part and in a rear part of said vehicle (1), said first supporting means (7) and said second supporting means (8) being provided with articulated coupling means (9) for coupling with said body (3), **characterised in that** at least said first supporting means (7) is comprised in a crosspiece (16) that has an axial length such as to occupy transversely said vehicle (1).

2. Structure (2) according to claim 1, wherein said crosspiece (16) is arranged for passing through and coupling with a frame (17) of said vehicle (1).

3. Structure (2) according to claim 2, wherein said frame (17) comprises beam means (18) extending between said front part and said rear part.

4. Structure (2) according to claim 3, wherein said beam means (18) is provided with an opening (19) shaped in such a way as to enable the passage through the latter of said crosspiece (16).

5. Structure (2) according to claim 3, or 4, wherein said crosspiece (16) comprises an end (20) projecting from said beam means (18) to the exterior of said vehicle (1).

6. Structure (2) according to claim 5, wherein said articulated coupling means (9) is provided substantially at said end (20).

7. Structure (2) according to claim 5, or 6, wherein said end (20) comprises a tapered zone.

8. Structure (2) according to any one of claims 2 to 7, and further comprising plate means (21) that is weldable to said crosspiece (16) and arranged for fixing said crosspiece (16) to said frame (17).

9. Structure (2) according to claim 8, wherein said plate means (21) comprises a recess (28) provided with sides arranged for surrounding at least partially said crosspiece (16).

10. Structure (2) according to claim 8, or 9, as claim 8 is appended to any one of claims 3 to 7, wherein said plate means (21) comprises hole means (22) arranged for receiving said fixing means (26) for fixing said plate means to said beam means (18).

11. Structure (2) according to claim 10, wherein said beam means (18) comprises further hole means (23) corresponding to said hole means (22), arranged for receiving said fixing means (26).

12. Structure (2) according to any one of claims 2 to 11, and further comprising further plate means (24) arranged for further fixing said crosspiece (16) to said frame (17).

13. Structure (2) according to claim 12, as appended to any one of claims 3 to 7, or to any one of claims 8 to 11, as claim 8 is appended to any one of claims 3 to 7, wherein said further plate means (24) comprises still further hole means (25) arranged for receiving said fixing means (26) for clamping said beam means (18) between said plate means (21) and said further plate means (24).

14. Structure (2) according to any preceding claim, wherein said fixing means comprises removable connecting means (26).

15. Structure (2) according to any preceding claim, wherein said second supporting means (8) is comprised in a further crosspiece that has an axial length such as to occupy transversely said vehicle (1).

16. Structure (2) according to claim 16, wherein said further crosspiece is functionally and structurally the same as said crosspiece (16).

17. Structure (2) according to any preceding claim, and further comprising further supporting means functionally and structurally the same as said first supporting means (7).

18. Structure (2) according to any preceding claim, wherein said crosspiece (16) has a tubular shape.

19. Structure (2) according to any preceding claim, wherein said crosspiece (16) comprises two pipes alongside each other.

20. Structure (2) according to any preceding claim, wherein said crosspiece (16) comprises a pair of elongated elements (29) having a "C"-shaped cross section.

21. Structure (2) according to claim 20, wherein said elongated elements (29) has a respective facing concavity of the "C".

22. Structure (2) according to claim 20, or 21, wherein between said elongated elements a laminar element (30) is interposed.

23. Structure (2) according to any preceding claim, wherein said crosspiece (16) is made of a material chosen from a group comprising: aluminium, aluminium alloy, light alloy.
